# EUROPÄISCHE PATENTSCHRIFT

(11) **EP 2 334 174 B1**
(45) Veröffentlichungstag und Bekanntmachung des Hinweises auf die Patenterteilung: **19.09.2012**
(21) Anmeldenummer: 09783418.8
(22) Anmeldetag: 25.09.2009
(51) Int. Cl.: A01N 33/18, A01N 43/50, A01N 25/04, A01P 13/00

(54) **FLÜSSIGE, IN WASSER EMULGIERBARE WIRKSTOFFKONZENTRATE**
LIQUID ACTIVE INGREDIENT CONCENTRATES THAT CAN BE EMULSIFIED IN WATER
CONCENTRÉS DE SUBSTANCES ACTIVES LIQUIDES, ÉMULSIFIABLES DANS L'EAU

(30) Priorität: 26.09.2008 EP 08165282
(43) Veröffentlichungstag der Anmeldung: 22.06.2011
(73) Patentinhaber: BASF SE, 67056 Ludwigshafen (DE)
(72) Erfinder: KRAPP, Michael, 67122 Altrip (DE); KOLB, Klaus, 67105 Schifferstadt (DE); SEAMAN, Graham, Hampshire SO31 6SE (GB)
(86) Internationale Anmeldenummer: PCT/EP2009/062441
(87) Internationale Veröffentlichungsnummer: WO 2010/034808

(56) Entgegenhaltungen:
- US-A- 5 019 150
- US-A- 5 405 825

## Beschreibung

Die vorliegende Erfindung betrifft flüssige, in Wasser emulgierbare Wirkstoffkonzentrate, welche wenigstens ein herbizides Dinitroanilin, insbesondere Pendimethalin, und wenigstens ein Imidazolinon-Herbizid, insbesondere Imazamox, enthalten.

Die gemeinsame Anwendung von herbiziden Dinitroanilinen mit Imidazolinon-Herbiziden führt bekanntermaßen zu einer guten Kontrolle schwierig zu bekämpfender monokotyler und dikotyler Schadpflanzen (siehe z.B. US 4,749,404, US 4,822,405 und EP 1042954). Es ist daher grundsätzlich wünschenswert, Formulierungen bereitzustellen, welche beide Wirkstoffe enthalten.

Hierbei stellt sich allerdings das Problem, dass Imidazolinon-Herbizide aufgrund ihrer Eigenschaft, wasserlösliche Salze zu bilden, häufig in Form wässriger Konzentrate formuliert werden. Herbizide Dinitroaniline hingegen sind typischerweise unpolare Verbindungen mit geringer Wasserlöslichkeit. Sie werden daher üblicherweise in Form emulgierbarer Konzentrate, d. h. in Form von Lösungen des Dinitroanilins in unpolaren, mit Wasser nicht mischbaren organischen Lösungsmitteln, welche zusätzlich oberflächenaktive Substanzen zur Emulgierung des Lösungsmittels enthalten, formuliert. Aufgrund der starken Polaritätsunterschiede ist es schwierig, stabile flüssige Co-Formulierungen beider Wirkstoffe bereitzustellen.

Die US 4,822,405 beschreibt eine Co-Formulierung von Imidazolinon-Herbiziden und herbiziden Dinitroanilinen in Form einer Öl-in-Wasser-Emulsion. In diesen Formulierungen liegt das Dinitroanilin in Form emulgierter Tröpfchen einer Lösung des Dinitroanilins in einem mit Wasser nicht mischbaren organischen Lösungsmittel vor, wohingegen das Imidazolinon-Herbizid in Form eines Ammonium- bzw. substituierten Ammoniumsalze in der wässrigen Phase gelöst vorliegt. Derartige Formulierungen sind bezüglich ihrer Lagerstabilität, insbesondere ihrer Lagerstabilität bei hohen und tiefen Temperaturen, problematisch. Auch kann die für die Applikation erforderliche Verdünnung der Formulierung mit Wasser zu Problemen wie Aufrahmen und/oder Absetzen der organischen Wirkstoffphase führen.

Die US 4,749,404 wiederum beschreibt eine Co-Formulierung von Imazaquin mit einem Dinitroanilin-Herbizid wie Pendimethalin in Form eines emulgierbaren Konzentrats, das erhältlich ist durch Vermischen einer Lösung vom Imazaquin in einem Alkohol wie Tetrahydrofurfurylalkohol mit einer Lösung des Dinitroanilins in einem mit Wasser nicht mischbaren organischen Lösungsmittel, welches oberflächenaktive Substanzen enthält. Die zum Lösen des Imazaquins benötigten Alkohole führen zu erhöhten Kosten der Formulierung und sind aufgrund von Zulassungsbeschränkungen problematisch.

Die US 5,679,619 beschreibt Co-Formulierungen von Pendimethalin mit Imidazolinon-Herbiziden in Form von Suspensionskonzentraten, wobei Pendimethalin in der wässrigen Phase in Form suspendierter Partikel vorliegt und das Imidazolinon-Herbizid in Form des Ammoniumsalzes in der wässrigen Phase gelöst vorliegt. Auch diese Formulierungen sind bezüglich ihrer Lagerstabilität nicht zufriedenstellend. Zudem besteht bei wässrigen Suspensionen von Dinitroanilinen, insbesondere bei Pendimethalin, die Gefahr einer Kristallisation des Wirkstoffs, die zu einer Teilchenvergrößerung und damit zu einem Absetzen des Wirkstoffs führt.

Die EP 496989 wiederum beschreibt Co-Formulierungen von Imidazolinon-Herbiziden mit 2,6-Dinitroanilin-Verbindungen in Form von emulgierbaren Konzentraten. Diese Formulierungen enthalten größere Mengen an polaren organischen Lösungsmitteln wie N-Methylpyrrolidon, Cyclohexanon oder Dipropylenglycol, die zum Lösen des Imidazolinon-Herbizids in der mit Wasser nicht mischbaren Phase des emulgierbaren Konzentrats benötigt werden. Diese organischen Lösungsmittel sind teilweise bezüglich ihrer Zulassung problematisch und stellen zudem einen zusätzlichen Kostenfaktor bei der Herstellung der Formulierungen dar.

Bei der gemeinsamen Applikation von Dinitroanilinen und Imidazolinon-Herbiziden hat es sich weiterhin als günstig erwiesen, größere Mengen an Adjuvantien, insbesondere solche aus der Gruppe ethoxylierter Fettsäureester von Polyhydroxylverbindungen zu applizieren, um die Effektivität der vorgenannten Wirkstoffe zu steigern. Es ist grundsätzlich wünschenswert, Co-Formulierungen bereitzustellen, die dieses Adjuvants bereits enthalten. Hierbei stellt sich jedoch das Problem, dass die Einarbeitung größerer Mengen an Adjuvantien in einer Formulierung deren Lagerstabilität verringern und zu Problemen bei der Wasserverdünnbarkeit führen können.

Der vorliegenden Erfindung liegt somit die Aufgabe zu Grunde, eine lagerstabile Co-Formulierung von wenigstens einem herbiziden Dinitroanilin, insbesondere Pendimethalin, mit wenigstens einem Imidazolinon-Herbizid, insbesondere Imazamox, bereitzustellen, welche eine größere Menge wenigstens einer als Adjuvans wirkenden nichtionischen oberflächenaktiven Substanz, insbesondere einer Substanz aus der Gruppe ethoxylierter Fettsäureester von Polyhydroxylverbindungen enthält. Die Formulierung sollte sich zudem durch eine hohe Verdünnungsstabilität auszeichnen, d. h. sie sollte sich ohne Probleme mit Wasser verdünnen lassen, ohne dass ein Abscheiden von Wirkstoffen und/oder sonstigen Bestandteilen auftritt. Insbesondere ist es wünschenswert, wenn auf polare organische Lösungsmittel verzichtet werden kann.

Es wurde überraschenderweise gefunden, dass diese Aufgabe durch flüssige, in Wasser emulgierbare Wirkstoffkonzentrate gelöst wird, welche die folgenden Bestandteile enthalten:
a) 100 bis 400 g/l wenigstens eines herbiziden Dinitroanilins (Bestandteil a);
b) 5 bis 100 g/l wenigstens eines Imidazolinonherbizides in Form seines Ammoniumsalzes oder substituierten Ammoniumsalzes (Bestandteil b);
c) 20 bis 100 g/l Wasser (Bestandteil c);
d) 15 bis 150 g/l wenigstens einer anionischen oberflächenaktiven Substanz, die wenigstens eine Sulfonsäuregruppe aufweist, in Form ihres Natrium-, Kalium-, Ammonium- oder substituierten Ammoniumsalzes (Bestandteil d);
e) 5 bis 100 g/l wenigstens einer polymeren, nichtionischen oberflächenaktiven Substanz, die wenigstens eine Polyethylenoxid-Gruppe und wenigstens einen unter Poly-C₃-C₄-alkylenoxidgruppen ausgewählten Rest aufweist (Bestandteil e);
f) 50 bis 250 g/l wenigstens einer nichtionischen oberflächenaktiven Substanz, ausgewählt unter ethoxilierten Fettsäureestern von Polyhydroxylverbindungen, Alkylpolyglucosiden, ethoxilierten C₄-C₁₆-Alkylphenolen und ethoxilierten C₈-C₂₂-Alkanolen (Bestandteil f);
g) wenigstens eines Kohlenwasserstofflösungsmittels ad 1 l (Bestandteil g); wobei die Mengenangaben der Komponenten a) bis f) in g/l auf das Gesamtvolumen des Wirkstoffkonzentrats bezogen sind.

Dementsprechend betrifft ein erster Gegenstand der vorliegenden Erfindung ein flüssiges, in Wasser emulgierbares Wirkstoffkonzentrat, enthaltend die Bestandteile a) bis g) in den oben bezeichneten Mengen. Hierbei sind die Mengenangaben der Komponenten a) bis f) in g/l auf das Gesamtvolumen des Wirkstoffkonzentrats bezogen.

Die Erfindung ist mit einer Reihe von Vorteilen verbunden: Trotz der gleichzeitigen Anwesenheit von Wasser und mit Wasser nicht mischbaren Kohlenwasserstofflösungsmitteln bei gleichzeitiger Anwesenheit größerer Mengen an verschiedenen oberflächenaktiven Substanzen kommt es nicht zu einer Entmischung der Formulierung. Die Formulierung ist zudem über einen längeren Zeitraum temperaturstabil, d. h. Entmischungsphänomene werden weder bei Lagerung bei tiefen Temperaturen von beispielsweise unterhalb 0°C, beispielsweise bis -10°C, noch bei hohen Temperaturen von oberhalb 40°C oder gar 50°C beobachtet. Zudem sind die erfindungsgemäßen Wirkstoffkonzentrate chemisch stabil, d.h. auch bei längerer Lagerzeit, in der Regel mehrere Monate, bei erhöhter Temperatur, beispielsweise bei Temperaturen oberhalb 40°C oder gar oberhalb 50°C findet kein oder zumindest kein nennenswerter Wirkstoffabbau statt. Die erfindungsgemäßen Wirkstoffkonzentrate lassen sich auch bei erhöhter Wasserhärte problemlos mit Wasser verdünnen, ohne dass es zu einem Absetzen oder Aufrahmen des Wirkstoffs kommt.

Beim Verdünnen der erfindungsgemäßen Wirkstoffkonzentrate mit Wasser werden stabile Emulsionen erhalten, die in der Regel wenigstens 24 h und häufig wenigstens 48 h stabil bleiben, ohne dass es zu einer Phasentrennung oder gar zu einem Abscheiden des Wirkstoffs kommt. Daher ermöglichen die erfindungsgemäßen Wirkstoffkonzentrate und die daraus erhältlichen wässrigen Verdünnungen eine problemlose Applikation der Wirkstoffe.

Die Viskosität der erfindungsgemäßen Wirkstoffkonzentrate ist niedrig und liegt bei 20°C typischerweise im Bereich von 5 bis 100, häufig 10 bis 60 und insbesondere 15 bis 35 mPas (bestimmt nach CIPAC MT 22.1).

Die erfindungsgemäßen Wirkstoffkonzentrate enthalten als Bestandteil a) wenigstens ein herbizides Dinitroanilin in einer Menge von 100 bis 400 g/l, insbesondere in einer Menge von 150 bis 300 g/l und besonders bevorzugt in einer Menge von 200 bis 280 g/l, bezogen auf das Gesamtvolumen der Formulierung.

Herbizide Dinitroaniline sind dem Fachmann bekannt, beispielsweise aus US 3,257,190, US 3,321,292, US 3,367,949 sowie aus C.D.S. Tomlin, "The Pesticide Manual", 13. Ausgabe, BCPC (2003) sowie aus "The Compendium of Pesticide Common Names": HTTP://www.alanwood.net/pesticides/. Beispiele für Dinitroaniline sind Benfluralin, Butralin, Dinitramin, Ethalfluralin, Fluchloralin, Isopropalin, Methalpropalin, Nitralin, Oryzalin, Pendimethalin, Prodiamin, Profluralin und Trifluralin. Bevorzugte Dinitroaniline sind Pendimethalin und Trifluralin. Gemäß einer besonders bevorzugten Ausführungsform der Erfindung handelt es sich bei dem herbiziden Dinitroanilin um Pendimethalin.

Als weiteren aktiven Bestandteil b) enthalten die erfindungsgemäßen Wirkstoffkonzentrate wenigstens ein Imidazolinon-Herbizid in Form seines Ammoniumsalzes oder substituierten Ammoniumsalzes in einer Menge von vorzugsweise 7 bis 80 g/l, häufig 8 bis 60 g/l und insbesondere 10 bis 50 g/l, bezogen auf das Gesamtvolumen des Wirkstoffkonzentrats.

Imidazolinon-Herbizide weisen typischerweise eine Carboxylgruppe auf und sind daher zur Salzbildung mit Aminobasen in der Lage. Unter Ammoniumsalzen von Imidazolinon-Herbiziden versteht man das durch Umsetzung der freien Säure des Imidazolinon-Herbizids mit Ammoniak gebildete Salz. Unter einem substituierten Ammoniumsalz versteht man das Umsetzungsprodukt der freien Säure des Imidazolinon-Herbizids mit einem primären, sekundären oder tertiären Amin, insbesondere einem Amin der allgemeinen Formel

NR¹R²R³

worin R¹ für C₁-C₄-Alkyl steht, das gegebenenfalls einen Substituenten aus der Gruppe Hydroxy oder C₁-C₄-Alkoxy trägt, und worin R² und R³ unabhängig voneinander für Wasserstoff stehen oder eine der für R¹ genannten Bedeutungen aufweisen. Beispiele für substituierte Ammoniumsalze sind die Ammoniumsalze des jeweiligen Imidazolinon-Herbizids mit Methylamin, Isopropylamin, Dimethylamin, Diisopropylamin, Trimethylamin, Ethylamin, Diethylamin, 2-Hydroxyethylamin, 2-(2-Hydroxyethoxy)eth-1-ylamin, Di(2-hydroxy-1-ethyl)amin, Benzylamin und dergleichen. Bevorzugte Salze sind die Ammoniumsalze.

Imidazolinon-Herbizide und ihre Salze sind dem Fachmann bekannt, beispielsweise aus D.L. Schaner, S.L. O'Connor "The Imidazolinone Herbicides", CRC Press Inc., Boca Raton FL, 1991 sowie aus "The Compendium of Pesticide Common Names", HTTP://www.alanwood.net/pesticides/. Zu den Imidazolinon-Herbiziden gehören insbesondere Imazamethabenz, Imazamox, Imazapic, Imazapyr, Imazaquin und Imazethapyr. Bevorzugte Imidazolinon-Herbizide sind Imazamox, Imazapic und Imazapyr. In einer besonders bevorzugten Ausführungsform der Erfindung handelt es sich bei dem Imidazolinon-Herbizid um Imazamox. Insbesondere enthalten die erfindungsgemäßen Wirkstoffkonzentrate die vorgenannten Imidazolinon-Herbizide in Form ihrer Ammoniumsalze. In einer besonders bevorzugten Ausführungsform handelt es sich um Imazamox in Form seines Ammoniumsalzes.

Imidazolinon-Herbizide weisen am Imidazolinon-Ring ein Asymmetriezentrum auf und können daher in racemischer Form oder in Form ihres R- oder S-Enantiomers oder in Form einer Mischung der Enantiomere, die bezüglich eines der Enantiomere angereichert sind, vorliegen. In einer bevorzugten Ausführungsform enthält das Wirkstoffkonzentrat das Imidazolinon-Herbizid in Form des R-Isomers oder in Form einer Mischung der Enantiomere, die bezüglich des R-Enantiomers angereichert ist. Die Enantiomere der Imidazolinon-Herbizide sind aus US 5,973,154 sowie aus US 6,339,158 bekannt. In einer besonders bevorzugten Ausführungsform enthält das Wirkstoffkonzentrat R-Imazamox in Form eines Ammoniumsalzes oder substituierten Ammoniumsalzes oder eine Mischung von R-Imazamox und S-Imazamox in Form ihrer Ammoniumsalze oder substituierten Ammoniumsalze, die bezüglich R-Imazamox angereichert ist.

In den erfindungsgemäßen Wirkstoffkonzentraten liegt das Gewichtsverhältnis von Bestandteil a) zu Bestandteil b) im Bereich von 1:1 bis 80:1, häufig im Bereich von 2:1 bis 50:1, vorzugsweise im Bereich von 4:1 bis 35:1, insbesondere im Bereich von 5:1 bis 25:1, oder im Bereich von 5:1 bis 30:1, wobei das Imidazolinon-Herbizid als freie Säure gerechnet wird.

Als weiteren Bestandteil c) enthalten die erfindungsgemäßen Wirkstoffkonzentrate 20 bis 100 g/l, vorzugsweise 40 bis 90 g/l und insbesondere 50 bis 80 g/l Wasser. Vorzugsweise setzt man entionisiertes Wasser ein, das weniger als 200 ppm, insbesondere weniger als 100 ppm und speziell weniger als 50 ppm mehrwertige Metallkationen wie Calciumionen, Magnesiumionen oder Eisenionen enthält.

Die erfindungsgemäßen Wirkstoffkonzentrate enthalten als Bestandteil d) wenigstens eine anionische oberflächenaktive Substanz, die wenigstens eine Sulfonsäuregruppe aufweist. In den erfindungsgemäßen Zusammensetzungen ist die oberflächenaktive Substanz in Form ihres Natrium-, Kalium-, Ammonium-, oder substituierten Ammoniumsalzes enthalten. Hierbei haben die Ausdrücke "Ammoniumsalz" bzw. "substituiertes Ammoniumsalz", die zuvor für die Ammoniumsalze bzw. substituierten Ammoniumsalze von Imidazolinon-Herbiziden genannten Bedeutungen. Vorzugsweise enthält das erfindungsgemäße Wirkstoffkonzentrat die wenigstens eine anionische oberflächenaktive Substanz in Form ihres Ammoniumsalzes.

Der Bestandteil d) dient sowohl der Stabilisierung des Wirkstoffkonzentrats als auch der Stabilisierung der beim Verdünnen mit Wasser entstehenden Wirkstoffemulsion.

Beispiele für erfindungsgemäß geeignete anionische oberflächenaktive Substanzen sind die Natrium-, Ammonium- und substituierten Ammoniumsalze von:
- C₈-C₂₂-Alkylschwefelsäurehalbestern (im Folgenden auch als C₈-C₂₂-Alkylsulfate bezeichnet), wie beispielsweise Laurylsulfat (Dodecylsulfat), Isotridecylsulfat, Cetylsulfat und Stearylsulfat;
- C₈-C₂₂-Alkylsulfonsäuren (im Folgenden auch als C₈-C₂₂-Alkylsulfonate bezeichnet), wie beispielsweise Laurylsulfonat, Isotridecylsulfonat, Cetylsulfonat and Stearylsulfonat;
- Arylsulfonsäuren, insbesondere C₁-C₁₆-Alkylbenzolsulfonsäuren, wie beispielsweise Cumylsulfonsäure, Octylbenzolsulfonsäure, Isooctylbenzolsulfonsäure, Nonylbenzolsulfonsäure, Decylbenzolsulfonsäure, Dodecylbenzolsulfonsäure, Isotridecylbenzolsulfonsäure, Tetrapropylenbenzolsulfonsäure, C₁₀-C₁₃-Alkylbenzolsulfonsäure, Naphthylsulfonsäure, Mono- und Di-(C₁-C₁₆)-alkylnaphthylsulfonsäure, wie beispielsweise Dibutylnaphthylsulfonsäure;
- Mono- und Di-(C₁-C₁₆)-alkyldiphenylether(di)sulfonsäuren, wie beispielsweise Dodecyldiphenyletherdisulfonat;
- Sulfaten und Sulfonaten von Fettsäuren und Fettsäureestern;
- Oligooxy-(C₂-C₃)-alkylen-(C₈-C₂₂)-alkylethersulfaten, insbesondere von Schwefelsäurehalbestern der ethoxilierter (C₈-C₂₂)-Alkanole, wie beispielweise Schwefelsäurehalbester von ethoxiliertem Laurylalkohol, ethoxiliertem Cetylalkohol oder ethoxyliertem Stearylalkohol;
- Oligooxy-(C₂-C₃)-alkylen-(C₁-C₁₆)-alkylbenzolethersulfaten, insbesondere Sulfaten der Ethoxylate von (C₁-C₁₆)-Alkylphenolen;
- Mono- und Di-(C₄-C₁₈)-alkylestern von Sulfobernsteinsäure (= (C₄-C₁₈)-Dialkylsulfosuccinate), wie beispielsweise Dioctylsulfosuccinat;
- Kondensaten der Naphthalinsulfonsäure, von (C₁-C₁₆)-Alkylnaphthalinsulfonsäure oder Phenolsulfonsäure mit Formaldehyd (= (C₁-C₁₆)-Naphthalinsulfonat-Formaldehyd-Kondensate, (C₁-C₁₆)-Alkylnaphthalinsulfonat-Formaldehyd-Kondensate und Phenolsulfonat-Formaldehyd-Kondensate);
- Oligooxy-(C₂-C₃)-alkylenmono-, -di- und -tristyrylphenylethersulfaten, insbesondere Oligoethoxylaten von Mono-, Di- und Tristyrylphenol;

Hierunter bevorzugt sind:
- Die Natrium- und Ammoniumsalze von C₄-C₂₀-Alkylbenzolsulfonsäuren, beispielsweise die Natrium- und Ammoniumsalze von Octylbenzolsulfonsäure, Isooctylbenzolsulfonsäure, Nonylbenzolsulfonsäure, Decylbenzolsulfonsäure, Dodecylbenzolsulfonsäure, Isotridecylbenzolsutfonsäure, Tetrapropylenbenzolsulfonsäure, C₁₀-C₁₃-Alkylbenzolsulfonsäure sowie Gemische, insbesondere Isomerengemische der vorgenannten Alkylbenzolsulfonsäuren, wobei die Ammoniumsalze der vorgenannten Alkylbenzolsulfonsäuren besonders bevorzugt sind; Die Natrium- und Ammoniumsalze von C₈-C₂₂-Alkylschwefelsäurehalbestern (im Folgenden auch als Natrium- bzw. Ammoniumsalze von C₈-C₂₂-Alkylsulfaten bezeichnet), insbesondere die Natrium- und Ammoniumsalze von Laurylsulfat, Dodecylsulfat, Isotridecylsulfat, Cetylsulfat und Stearylsulfat; Natrium- und Ammoniumsalze von Mono- und Di-C₄-C₁₈-Alkylestern der Sulfobernsteinsäure, insbesondere die Natrium- und Ammoniumsalze des Sulfobernsteinsäuredihexylesters, des Sulfobernsteinsäuredi-n-octylesters, des Sulfobernsteinsäuredi-iso-octylesters und des Sulfobemsteinsäuredi-2-ethylhexylesters; sowie Gemische der vorgenannten anionischen oberflächenaktiven Substanzen.

Hierunter sind besonders bevorzugt die Natrium- und Ammoniumsalze von C₄-C₂₀-Alkylbenzolsulfonsäuren, beispielsweise die Natrium- und Ammoniumsalze von Octylbenzolsulfonsäure, Isooctylbenzolsulfonsäure, Nonylbenzolsulfonsäure, Decylbenzolsulfonsäure, Dodecylbenzolsulfonsäure, Isotridecylbenzolsulfonsäure, Tetrapropylenbenzolsulfonsäure, C₁₀-C₁₃-Alkylbenzolsulfonsäure sowie Gemische, insbesondere Isomerengemische der vorgenannten Alkylbenzolsulfonsäuren, wobei die Ammoniumsalze der vorgenannten Alkylbenzolsulfonsäuren ganz besonders bevorzugt sind.

In einer besonders bevorzugten Ausführungsform der Erfindung enthält das Wirkstoffkonzentrat als Komponente d) wenigstens ein Ammoniumsalz einer C₄-C₂₀-Alkylbenzolsulfonsäure und insbesondere das Ammoniumsalz einer C₈-C₁₆-Alkylbenzolsulfonsäure, z. B. das Ammoniumsalz der Octylbenzolsulfonsäure, der Isooctylbenzolsulfonsäure, der Nonylbenzolsulfonsäure, der Decylbenzolsulfonsäure, der Dodecylbenzolsulfonsäure, der Isotridecylbenzolsulfonsäure oder ein Gemisch dieser Ammoniumsalze.

Häufig enthält das erfindungsgemäße Wirkstoffkonzentrat den Bestandteil d) in einer Menge von 20 bis 100 g/l, vorzugsweise 20 bis 80 g/l, insbesondere in einer Menge von 20 bis 50 g/l, bezogen auf das Gesamtvolumen des Wirkstoffkonzentrats.

Weiterhin enthält das erfindungsgemäße Wirkstoffkonzentrat als Bestandteil e) eine nichtionische oberflächenaktive Substanz, die wenigstens eine, z. B. eine oder zwei Polyethylenoxid-Gruppen und wenigstens eine, z. B. eine oder zwei Poly-C₃-C₄-Alkylenoxidgruppen, insbesondere wenigstens eine, z. B. eine oder zwei Polypropylenoxid-Gruppen aufweist. Daneben kann die nicht ionische oberflächenaktive Substanz auch einen oder mehrere, z. B. einen C₁-C₁₀-Alkylrest aufweisen. Vorzugsweise weist die polymere, nicht ionische oberflächenaktive Substanz ein zahlenmittleres Molekulargewicht von wenigstens 1500 Dalton, z. B. 1500 bis 100000 Dalton, insbesondere wenigstens 2000 Dalton, z. B. 2000 bis 40000 Dalton auf. Vorzugsweise weist die nicht ionische oberflächenaktive Substanz einen HLB-Wert nach Griffin im Bereich von 5 bis 20 und insbesondere im Bereich von 8 bis 18 auf.

Vorzugsweise ist die polymere nicht ionische oberflächenaktive Substanz ausgewählt unter Ethylenoxid-Propylenoxid-Blockcopolymeren, insbesondere unter Ethylenoxid-Propylenoxid-Diblockcopolymeren und Ethylenoxid-Propylenoxid-Triblockcopolymeren, wobei die Di- und Triblockcopolymere auch einen C₁-C₁₀-Alkylrest aufweisen können. Das zahlenmittlere Molekulargewicht der Ethylenoxid-Propylenoxid-Diblockcopolymeren und -Triblockcopolymeren liegt vorzugsweise im Bereich von 1500 bis 100000 Dalton, insbesondere 2000 bis 40000 Dalton.

Häufig enthält das erfindungsgemäße Wirkstoffkonzentrat den Bestandteil e) in einer Menge von 7 bis 80 g/l, vorzugsweise 10 bis 70 g/l, insbesondere in einer Menge von 15 bis 50 g/l, bezogen auf das Gesamtvolumen des Wirkstoffkonzentrats.

Vorzugsweise liegt das Gewichtsverhältnis von Bestandteil d) zu Bestandteil e) in den erfindungsgemäßen Wirkstoffkonzentraten im Bereich von 20:1 bis 1:5, häufig 10:1 bis 1:3, und insbesondere im Bereich von 5:1 bis 1:2.

Als weiteren Bestandteil f) enthält das erfindungsgemäße Wirkstoffkonzentrat wenigstens eine nicht ionische, oberflächenaktive Substanz, die auch als Adjuvans bezeichnet wird. Diese ist erfindungsgemäß unter ethoxylierten Fettsäureestern von Polyhydroxylverbindungen, Alkylpolyglucosiden, ethoxylierten C₄-C₁₆-Alkylphenolen und ethoxylierten C₈-C₂₂-Alkanolen sowie Mischungen dieser Substanzen ausgewählt. Die Menge des Bestandteils f) beträgt häufig 100 bis 250 g/l und vorzugsweise 150 bis 200 g/l, bezogen auf das Gesamtvolumen des erfindungsgemäßen Wirkstoffkonzentrats.

Bei den ethoxylierten Fettsäureestern von Polyhydroxylverbindungen handelt es sich in der Regel um Ethoxylate von Mono, Di- oder Triestern von Fettsäuren mit aliphatischen oder cycloaliphatischen Polyhydroxylverbindungen, die in der Regel 3, 4, 5 oder 6 Hydroxylgruppen und 3, 4, 5 oder 6 C-Atome aufweisen, wobei die nicht-ethoxylierten Ester der Fettsäuren mit Polyhydroxylverbindungen in der Regel noch wenigstens eine, vorzugsweise 2, 3 oder 4 freie Hydroxylgruppen aufweisen. Die Fettsäurebestandteile in diesen Substanzen sind üblicherweise von gesättigten, einfach oder mehrfach ungesättigten Fettsäuren abgeleitet, wobei die Fettsäuren in der Regel 6 bis 22 und insbesondere 8 bis 18 C-Atomen aufweisen. Beispiele für geeignete Fettsäurebestandteile in diesen Substanzen sind gesättigte Fettsäuren wie Laurinsäure, Myristinsäure, Palmitinsäure, Margarinsäure, Stearinsäure, Arachinsäure, Behensäure, Lignocerinsäure und Cerotinsäure, ungesättigte Fettsäuren wie Undecylensäure, Palmitoleinsäure, Ölsäure, Elaidinsäure, Vaccensäure, Icosensäure, Cetoleinsäure, Erucasäure und Nervonsäure abgeleiteten Reste, sowie mehrfach ungesättigte Fettsäuren wie Linolsäure α-Linolensäure, γ-Linolensäure, Arachidonsäure, Timnodonsäure, Clupanodonsäure und Cervonsäure, sowie Gemische der vorgenannten Fettsäuren.

Hierunter bevorzugt sind ethoxylierte Monofettsäureester des Glycerins sowie ethoxylierte Mono- und Difettsäureester des Sorbitans bzw. des Sorbitananhydrids, wobei die Fettsäurereste in diesen Verbindungen vorzugsweise 8 bis 20 und insbesondere 10 bis 18 C-Atome aufweisen. Die Fettsäurereste können gesättigt sowie ein- oder mehrfach ungesättigt sein und sind typischerweise von den vorgenannten Fettsäuren und deren Gemischen abgeleitet, insbesondere von Laurinsäure, Myristinsäure, Palmitinsäure, Margarinsäure, Stearinsäure, Palmitoleinsäure, Ölsäure, Linolsäure und deren Gemischen.

Der Ethoxylierungsgrad, d. h. die durchschnittliche Anzahl an von Ethylenoxid abgeleiteten Wiederholungseinheiten beträgt typischerweise 5 bis 50 und insbesondere 10 bis 40 (Zahlenmittel).

Unter Alkylpolyglucosiden versteht man nicht ionische Tenside, welche durch sauer katalysierte Reaktion von Glukose oder Stärke mit Fettalkoholen, die in der Regel 8 bis 22 C-Atome aufweisen, erhältlich sind (siehe auch Römpp-Lexikon Chemie, Bd. 1. A-Cl, Seite 118, 10. völlig überarbeitete Auflage, 1996, Thieme Verlag, Stuttgart, New York). Alkylpolyglucoside weisen typischerweise die folgende Struktur auf: 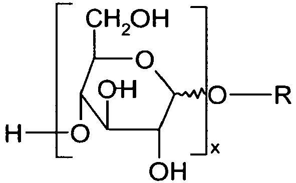 worin x im Mittel 1,1 bis 2,0 und insbesondere 1,2 bis 1,6 beträgt und R für einen über das anomere Sauerstoffatom der Glukose gebundenen linearen oder verzweigten Alkylrest mit vorzugsweise 8 bis 22 Kohlenstoffatomen steht.

Unter den ethoxylierten C₄-C₁₆-Alkylphenolen sind solche mit einem Ethoxylierungsgrad im Bereich von 2 bis 40 und insbesondere im Bereich von 4 bis 30, beispielsweise ethoxyliertes Octylphenol, ethoxyliertes Nonylphenol, ethoxyliertes Dodecylphenol und ethoxyliertes Isotridecylphenol bevorzugt.

Unter ethoxylierten C₈-C₂₂-Alkanolen sind solche mit einem Ethoxylierungsgrad von 2 bis 40 und insbesondere 4 bis 30, insbesondere ethoxylierte C₁₀-C₁₈-Alkanole wie ethoxyliertes Decanol, ethoxyliertes Dodecanol, ethoxyliertes Tridecanol, ethoxyliertes Isotridecanol, ethoxylierter Laurylalkohol und ethoxylierter Stearylalkohol bevorzugt.

Als Komponente f) sind insbesondere ethoxylierte Fettsäureester des Sorbitans, insbesondere ethoxylierte Monofettsäureester des Sorbitans (Polysorbate) bevorzugt, wobei der Festtsäurerest typischerweise 8 bis 22 C-Atome und insbesondere 10 bis 18 C-Atome aufweist und insbesondere von einer der folgenden Fettsäuren oder einem Gemisch davon abgeleitet ist: Laurinsäure, Myristinsäure, Palmitinsäure, Margarinsäure, Stearinsäure, Palmitoleinsäure, Ölsäure und Linolsäure. Der Ethoxylierungsgrad liegt hierbei typischerweise im Bereich von 5 bis 40 und besonders bevorzugt im Bereich von 10 bis 30. In einer ganz besonders bevorzugten Ausführungsform der Erfindung handelt es sich bei der Komponente f) um ethoxiliertes Sorbitanmonolaurat.

Als weitere Komponente enthalten die erfindungsgemäßen Zusammensetzungen wenigstens ein Kohlenwasserstofflösungsmittel. Die Menge an Kohlenwasserstofflösungsmittel wird typischerweise im Bereich von 100 bis 750 g/l und insbesondere im Bereich von 200 bis 600 g/l, bezogen auf das Gesamtvolumen der Formulierung liegen. Vorzugsweise weist das Kohlenwasserstofflösungsmittel einen Siedpunkt bei Normaldruck im Bereich von 120 bis 300°C, insbesondere im Bereich von 150 bis 250°C auf. Unter aromatischen Kohlenwasserstoffen werden im Rahmen dieser Erfindung ein- und mehrkernige Aromaten verstanden, die gegebenenfalls eine oder mehrere aliphatische Substituenten, insbesondere Alkylgruppen tragen. Hierzu zählen neben Toluol, Xylolen, insbesondere Gemische aromatischer Kohlenwasserstoffe, die als Fraktionen bei der Destillation, insbesondere aus Erdölprodukten, im genannten Siedepunktsbereich erhalten werden. Hierzu zählen insbesondere kommerzielle Produkte, die unter den Handelsnamen Solvesso®, insbesondere Solvesso^{®} 100, Solvesso^{®} 150, Solvesso^{®} 200, Solvesso^{®} 150 ND, Solvesso^{®} 200 ND, Aromatic^{®}, insbesondere Aromatic^{®} 150 und Aromatic^{®} 200, Hydrosol^{®}, insbesondere Hydrosol^{®} A 200 und Hydrosol^{®} A 230/270, Caromax^{®}, insbesondere Caromax^{®} 20 und Caromax^{®} 28, Aromat K 150, Aromat K 200, Shellsol^{®}, insbesondere Shellsol^{®} A 100 und Shellsol^{®} A 150, und Fin FAS-TX, insbesondere Fin FAS-TS 150 und Fin FAS-TX 200 bekannt sind. Besonders bevorzugt sind die Gemische Solvesso^{®} 150 ND und Solvesso^{®} 200 ND (Exxon-Mobil Chemical), in denen das potentielle Karzinogen Naphthalin abgereichert wurde. So beinhaltet Solvesso^{®} 150 ND überwiegend aromatische Kohlenwasserstoffe mit 10 oder 11 Kohlenstoffen, die im Bereich von 175 bis 209°C sieden und bei denen es sich vor allem um Alkylbenzole handelt, während Solvesso^{®} 200 ND überwiegend aromatische Kohlenwasserstoffe mit 10 bis 14 Kohlenstoffen beinhaltet, die im Bereich von 235 bis 305°C sieden und bei denen es sich vor allem um Alkylnaphthaline handelt. Ein weiteres Beispiel für die hier benannten aromatischen Kohlenwasserstoffe ist ein unter dem Handelsnamen Hisol SAS-296 geführtes Produkt, bei dem es sich um ein Gemisch aus 1-Phenyl-1-xylylethan und 1-Phenyl-1-ethylphenylethan handelt.

Die vorgenannten Bestandteile a) bis g) machen in der Regel wenigstens 95 Gew.-% insbesondere wenigstens 99 Gew.-% und speziell wenigstens 99,5 Gew.-% des erfindungsgemäßen Wirkstoffkonzentrats aus.

Es hat sich als vorteilhaft erwiesen, wenn das erfindungsgemäße Wirkstoffkonzentrat, bezogen auf sein Gesamtgewicht, nicht mehr als 5 Gew.-%, insbesondere nicht mehr als 1 Gew.-% und speziell nicht mehr als 0,5 Gew.-% oder im wesentlichen keine mit Wasser mischbare organische Lösungsmittel enthält. Hierunter versteht man organische, bei Raumtemperatur flüssige Substanzen, die bei 25°C eine Löslichkeit in Wasser von wenigstens 50 g/l, häufig wenigstens 100 g/l aufweisen. Hierzu zählen C₁-C₄-Alkanole wie Methanol, Ethanol, Propanol, Isopropanol und n-Butanol, C₂-C₆-Alkylenglycole wie Ethylenglycol, Propylenglycol, Butylenglycol, Hexylenglycol, Di- und Tri-Alkylenglycole, N-Alkyllactame wie N-Methylpyrrolidon, N-Ethylpyrrolidon, Dialkylsulfone wie Dimethylsulfoxid, cyclische Ether wie Tetrahydrofuran, Dioxan und Tetrahydrofurfurylalkohol.

Weiterhin hat es sich für die Stabilität der Formulierung als vorteilhaft erwiesen, wenn sie weniger als 200 ppm, insbesondere weniger als 100 ppm und besonders bevorzugt weniger als 50 ppm mehrwertige Metallkationen, beispielsweise Erdalkalimetallkationen, Eisenionen oder sonstige Übergangsmetallkationen enthält.

Neben den vorbenannten Bestandteilen können die erfindungsgemäßen Wirkstoffkonzentrate weitere Bestandteile, wie sie üblicherweise in Formulierungen eingesetzt werden, enthalten. Hierzu zählen Mittel zur Einstellung des pH-Wertes, insbesondere Säuren, beispielsweise Alkancarbonsäuren mit 1 bis 10 C-Atomen wie Essigsäure und Propionsäure und deren Salze, insbesondere deren Ammonium-, Natrium- und Kaliumsalze, wie Ammoniumacetat, Natriumacetat, Kaliumacetat und Natriumpropionat, Ammoniak, Aminbasen, z. B. die vorstehend genannten Amine der Formel NR¹R²R³, (an)organische Puffersalze wie Hydrogencarbonate, Carbonate, Hydrogenphosphate, Dihydrogenphosphate wie Natriumhydrogencarbonat, Kaliumhydrogencarbonat, Dinatriumhydrogenorthophosphat, Natriumdihydrogenorthophosphat, Natriumammoniumorthophosphat, Kaliumhydrogenphosphat, Dikaliumhydrogenorthophosphat, Kaliumdihydrogenorthophosphat, Kaliumammoniumhydrogenorthophosphat und dergleichen. Die Menge derartiger Mittel wird in der Regel 0,5 g/l nicht überschreiten und liegt häufig im Bereich von 0,1 bis 5 g/l, bezogen auf das Gesamtvolumen der Formulierung. Vorzugsweise wird die Menge dieser Mittel so gewählt, dass der resultierende pH-Wert der wässrigen Phase im Bereich von 5 bis 9 und insbesondere im Bereich von 6 bis 8 liegt.

Weiterhin können die erfindungsgemäßen Wirkstoffkonzentrate Entschäumer enthalten. Geeignete Entschäumer umfassen Polysiloxane, wie etwa Polydimethylsiloxan, langkettige Alkohole, fluororganische Verbindungen, Fettsäuren und deren Salze sowie Mischungen daraus. Entschäumer werden üblicherweise in Mengen von 0,01 bis 1 Gramm pro Liter des Wirkstoffkonzentrats eingesetzt.

Weiterhin können die erfindungsgemäßen Wirkstoffkonzentrate Konservierungsmittel enthalten. Geeignete Konservierungsmittel zur Vermeidung von bakteriellen Befall der erfindungsgemäßen Zusammensetzungen umfassen Formaldehyd, Alkylester der para-Hydroxybenzoesäure, Natriumbenzoat, 2-Brom-2-nitropropan-1,3-diol, ortho-Phenylphenol, Dichlorophen, Benzylalkoholhemiformal, Thiazolinon- und Isothiazolinonderivate, wie etwa Alkylisothiazolinone und Benzisothiazolinone, 5-Chlor-2-methyl-4-isothiazolinon, Pentachlorophenol, 2,4-Dichlorbenzylalkohol sowie Mischungen daraus. Beispiele von geeigneten im Handel erhältlichen bakteriziden Produkten sind Proxel^{®} (ICI), Acticide^{®} RS (Thor Chemie), Kathon^{®} (Rohm & Haas) und Acticide MBS (Thor Chemie). In der Regel wird der Anteil an Konservierungsmittel 1 g/l nicht überschreiten und wird üblicherweise im Bereich von 0,01 bis 1 Gramm pro Liter liegen.

Die erfindungsgemäßen Wirkstoffkonzentrate lassen sich in der Regel einfach durch Mischen der Inhaltsstoffe, bis sich eine augenscheinlich homogene Flüssigkeit gebildet hat, herstellen. In welcher Reihenfolge die Zugabe der Inhaltsstoffe erfolgt, ist gewöhnlich von untergeordneter Bedeutung. Beispielsweise können die Inhaltsstoffe in einen Behälter gegeben werden und die so erhaltene Mischung wird zum Beispiel durch Rühren homogenisiert, bis sich eine homogene Flüssigkeit gebildet hat. Vorzugsweise wird man zunächst das Dinitroanilin in einer Teil- oder Gesamtmenge des Kohlenwasserstofflösungsmittels g) lösen und die so erhaltene Lösung mit einer wässrigen Lösung des Imidazolinon-Herbizid in Form seines Salzes und den übrigen Inhaltsstoffen des Wirkstoffkonzentrats vermischen, beispielsweise durch Vermischen einer Lösung des Dinitroanilins in dem Bestandteil g), welche wenigstens einen Teil der Bestandteile d), e) und/oder f) enthält, mit einer wässrigen Lösung des Salzes des Imidazolinon-Herbizids, welche gegebenenfalls einen Teil oder die Gesamtmenge der Bestandteile d), e) und/oder f) enthält. Insbesondere geht man so vor, dass man zunächst das Dintroanilin, sowie die Haupt- oder insbesondere die Gesamtmenge der Bestandteile d), e) und f) in dem Kohlenwasserstofflösungsmittel löst, und die so erhaltene Lösung mit einer wässrigen Lösung des Salzes des Imidazolinon-Herbizids, welche gegebenenfalls die Restmenge der Bestandteile d), e) und/oder f) enthält, vermischt. Die Lösung des Salzes des Imidazolinon-Herbizides stellt man in der Regel durch Suspendieren der freien Säure des Imidazolinon-Herbizides in Wasser, gefolgt von einer zur Salzbildung geeigneten Base, z.B. ein Alkalimetallhydroxid oder -carbonat, Ammoniak oder eine substituiertes Amin NR¹R²R³, her, wobei man gegebenenfalls überschüssige Base durch Zugabe einer Säure, z.B. Essigsäure, neutralisiert. Das Vermischen erfolgt typischerweise bei Temperaturen von 10°C bis 90°C, insbesondere von 10°C bis 60°C.

Höhere Temperaturen, beispielsweise 35°C oder 40°C oder höher, sind möglicherweise zweckmäßig, um die Bildung der Mikroemulsion zu beschleunigen. Anderseits kann das Mischen in de Regel auch bei niedrigeren Temperaturen, etwa bei 10°C bis 35°C durchgeführt werden.

Gegenstand der Erfindung ist weiterhin die Verwendung der hierin beschriebenen Wirkstoffkonzentrate zur Bekämpfung von unerwünschtem Pflanzenwuchs, insbesondere zur Bekämpfung von Schadpflanzen in Kulturpflanzen, insbesondere von Schadpflanzen in Kulturen von Leguminosen, insbesondere in Kulturen von Hülsenfrüchten wie Erbsen und Bohnen. Die erfindungsgemäßen Wirkstoffkonzentrate sind zur Bekämpfung einer Vielzahl monokotyler und dikotyler Schadpflanzen geeignet, insbesondere zur Bekämpfung von Polygonum-Arten, Fumaria-Arten, Cerastium-Arten, Rhaphanus-Arten, Mohngewächse, Hahnenfussgewächse, Anthemis-Arten, Aethusa spp. und Capsella-Arten.

Die erfindungsgemäßen Wirkstoffkonzentrate werden typischerweise in einer Menge appliziert, dass eine Gesamtmenge der applizierten Wirkstoffe (Gesamtaufwandmenge) im Bereich von 100 bis 4500 g/ha, insbesondere im Bereich von 200 bis 2200 g/ha resultiert. Die Aufwandmenge an Imidazolinon-Herbizid, gerechnet als freie Säure, liegt typischerweise im bereich von 5 bis 500 g/h, insbesondere im Bereich von 10 bis 250 g/ha. Die Aufwandmenge an Dinitroanilinherbizid liegt typischerweise im Bereich von 95 bis 4000 g/ha, insbesondere im Bereich von 190 bis 2000 g/ha.

Die Applikation der erfindungsgemäßen Wirkstoffkonzentrate kann im Vorauflauf, d.h. vor Auflaufen der Schadpflanzen, als auch im Nachauflauf erfolgen. Die erfindungsgemäßen Wirkstoffkonzentrate sind insbesondere für die Bekämpfung von Schadpflanzen im Vorauflauf geeignet.

Die erfindungsgemäßen Wirkstoffkonzentrate werden üblicherweise mit Wasser verdünnt appliziert. Hierzu werden die erfindungsgemäßen Wirkstoffkonzentrate mit Wasser auf die gewünschte Anwendungskonzentration verdünnt, vorzugsweise mit wenigstens 50 Teilen Wasser, z.B. 50 bis 5000 Teilen Wasser, insbesondere mit wenigstens 100 Teilen Wasser, z.B. 50 bis 5000 Teilen Wasser, pro Gewichtsteil des Wirkstoffkonzentrats. Die Verdünnung wird gewöhnlich dadurch bewerkstelligt, dass man das erfindungsgemäße Wirkstoffkonzentrat zu dem Wasser gibt. Zur raschen Vermischung des Konzentrats mit Wasser wird üblicherweise Agitation, wie beispielsweise Rühren, eingesetzt. Allerdings ist eine Agitation in der Regel nicht notwendig. Obwohl die Temperatur für den Verdünnungsvorgang ein unkritischer Faktor ist, werden Verdünnungen gewöhnlicherweise bei Temperaturen im Bereich von 0°C bis 50°C, insbesondere bei 10°C bis 30°C oder bei Umgebungstemperatur durchgeführt. Das zum Verdünnen eingesetzte Wasser ist in der Regel Leitungswasser. Das Wasser kann aber bereits wasserlösliche Verbindungen beinhalten, die im Pflanzenschutz verwendet werden, wie etwa Nährstoffe, Düngemittel oder Pestizide.

Die folgenden Beispiele dienen der Erläuterung der Erfindung.

Es wurden die folgenden Einsatzmaterialien verwendet:
Imazamox: Reinheit > 95 %;
Pendimethalin: Reinheit > 95 %;
Anionischer Emulgator d1): 50-70 Gew.-%ige Lösung von Calciumdodecylbenzolsulfonat in iso-Butanol;
Anionischer Emulgator d2): 50-70 Gew.-%ige Lösung von Ammoniumdodecylbenzolsulfonat in einem aromatischen Kohlenwasserstofflösungsmittel;
Anionischer Emulgator d3): 60-70 Gew.-%ige Lösung von Natrium-dioctylsulfosuccinat in einem aromatischen Kohlenwasserstofflösungsmittel;
Nichtionischer Emulgator e1): nichtionisches Ethylenoxid-Propylenoxid-Blockcopolymer, M_{N} 9000, HLB-Wert 14 (Antarox B500, Rhodia);
Nichtionischer Emulgator e2): nichtionischen Ethylenoxid-Propylenoxid-Blockcopolymer, M_{N} 6000, HLB-Wert 14 (Witconol NS 500K, Akzo Nobel);
Nichtionisches Adjuvans f1): Polyoxyethylen(20)-sorbitan-monooleat (Polysorbat 20); Kohlenwasserstofflösungsmittel g): Gemisch von Alkylaromaten mit einem Siedebereich von 244-299°C und einem Naphthalingehalt unter 0,9 Gew.-% (Solvesso® 200 ND, Exxon);
Konzentrierter Ammoniak (34 gew.-%ig);
Entschäumer 1: Polydimethylsiloxan (Rhodorsil 481, Rhodia);
Entschäumer 2: wässrige Polydimethylsiloxan-Emulsion (SAG 220, Kurt Obermeier GmbH&Co.KG).

### Allgemeine Herstellungsvorschrift:

Geschmolzenes Pendimethalin wurde in dem Kohlenwasserstofflösungsmittel in der gewünschten Menge gelöst. Hierzu gab man nacheinander das nichtionische Adjuvans f1, den anionischen Emulgator d1, d2 oder d3 und den nichtionischen Emulgator e1 oder e2 und rührte, bis eine homogene Lösung erhalten wurde.

Imazamox wurde in Form der freien Säure in der gewünschten Menge Wasser suspendiert und mit konzentrierter wässriger Ammoniak-Lösung neutralisiert, wobei man eine klare Lösung erhielt. Der pH-Wert der Lösung wurde mit 10%iger Essigsäure auf pH 6,4-6,7 eingestellt. Anschließend gab man die gewünschte Menge an Dinatriumhydrogenorthophosphat und Kaliumdihydrogenorthophosphat zu und rührte, bis eine homogene Lösung des Imazamox-Ammoniums erhalten wurde.

In einem Hochgeschwindigkeitslabormischer mit Rotor-Stator-Anordnung (Silverson L4RT mit Emulgiersieb) wurde die Lösung des Pendimethalins vorgelegt. Hierzu gab man den Entschäumer und die wässrige Lösung des Imazamox-Ammoniums und rührte 10 min. mit maximaler Rührgeschwindigkeit.

Die Zusammensetzung der Beispiele 1 bis 14 und Vergleichsbeispiele V1 bis V4 ist in der folgenden Tabelle 1 angegeben:

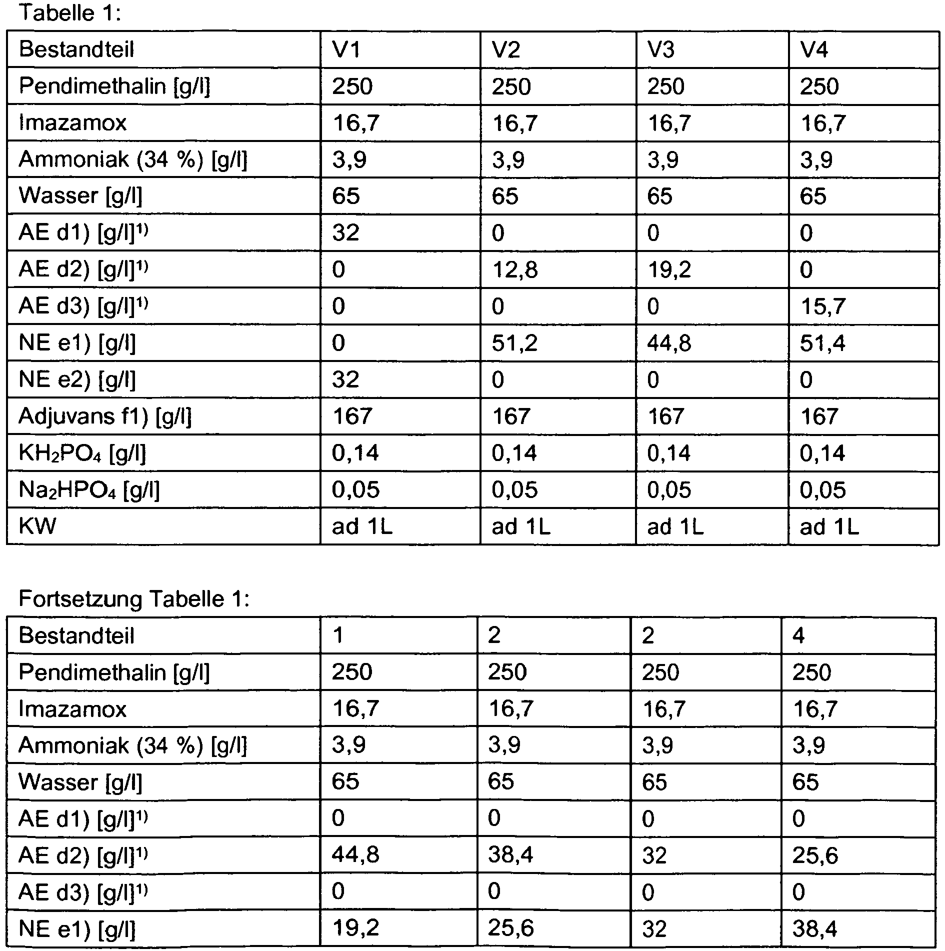

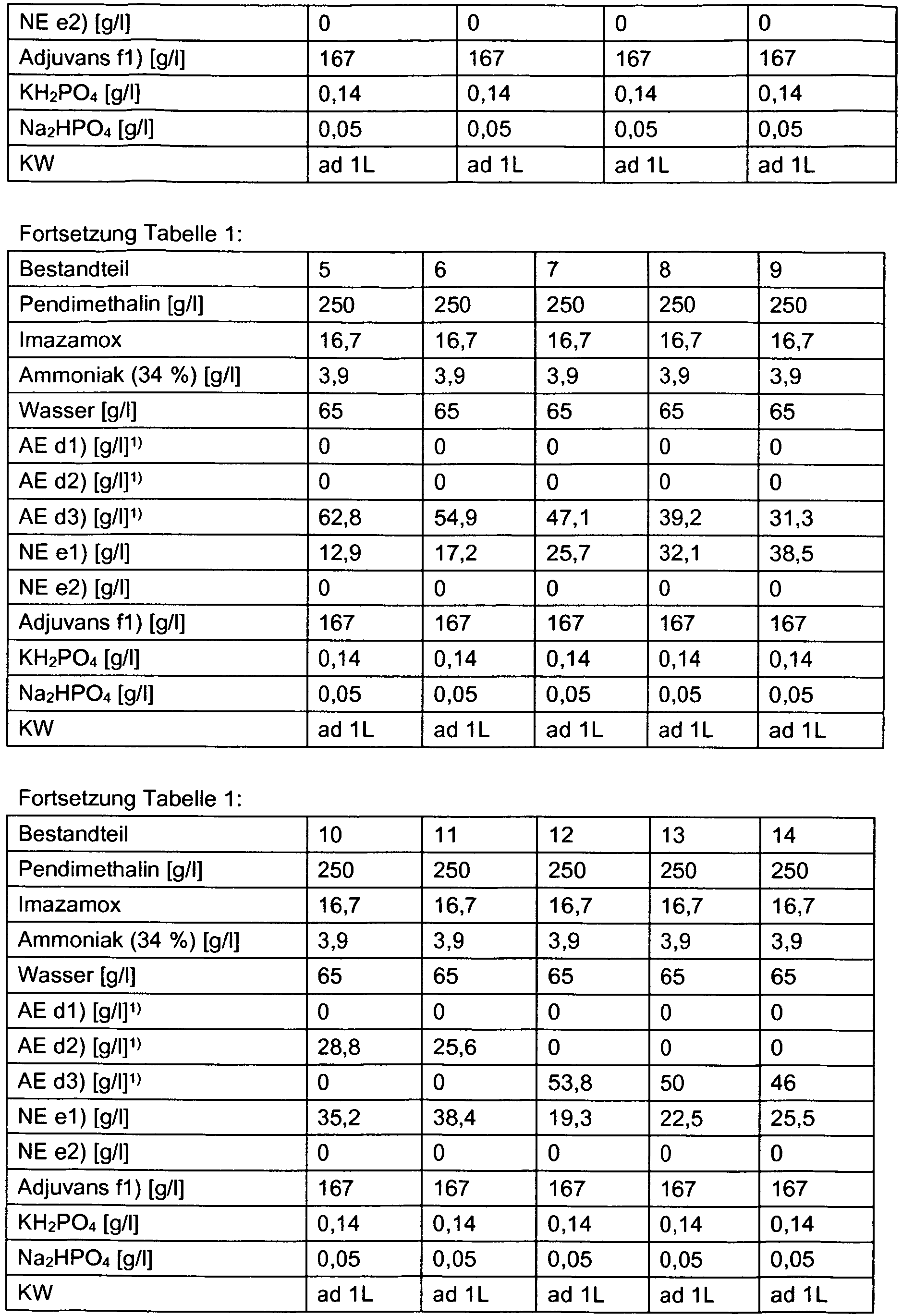

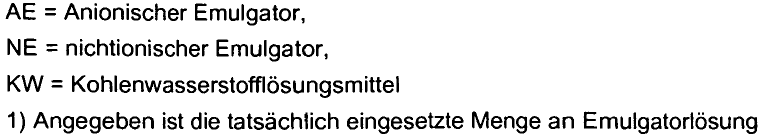

### Prüfung der Formulierungen:

Zur Bestimmung der chemischen Stabilität der Formulierung wurde der Gehalt an Pendimethalin nach literaturbekannten Methoden sowie der Gehalt an Imazamox mittels reversed phase HPLC (Chromatographiesäule z.B. Zorbax Eclipse Typ 250x4,6 mm; Eluent z.B. Acetonitril/Wasser/Tetrahydrofuran-Gemisch) vor und nach Lagerung bestimmt.

Zur Bestimmung der physikalischen Stabilität wurden die jeweilige Formulierungen in Küvetten bei der gewünschten Temperatur über einen bestimmten Zeitraum gelagert und anschließend die Trübung bzw. die Bildung einer Phasentrennung bewertet.

Zur Bestimmung der Verdünnungsstabilität wurden die Formulierungen bei 30°C unter Rühren in CIPAC-A Wasser oder CIPAC-D Wasser gegeben, so dass eine bestimmte Konzentration der Formulierung resultierte. Anschließend wurden die Verdünnungen in einem Messzylinder bis zu 24 h aufbewahrt und die Bildung von Schaum, Öl oder Rahm bewertet.

### Vergleichsbeispiel 1:

Das Wirkstoffkonzentrat aus Vergleichsbeispiel 1 zeigte nach 4 Wochen bei -5°C keine Phasentrennung. Nach 12 Wochen bei 40°C bzw. nach 2 Wochen bei 54°C hatte sich ein schwerlöslicher Niederschlag gebildet.

Beim Verdünnen des Wirkstoffkonzentrats aus Vergleichsbeispiel 1 mit CIPAC-A Wasser bzw. CIPAC-D Wasser auf Konzentrationen von 4,5 % v/v sowie auf 1,1 % v/v erhielt man spontan Emulsionen, die auch nach 24 h bei 20°C keine Phasentrennung zeigten.

### Beispiele 1 bis 4, Vergleichsbeispiele V2 und V3:

Die Wirkstoffkonzentrate der Beispiele 1 bis 4 und der Vergleichsbeispiele V2 und V3 wurden 10 Tage bei 20°C gelagert und bezüglich des optischen Erscheinungsbildes beurteilt. Die Wirkstoffkonzentrate der Beispiele 1 bis 4 waren unmittelbar nach der Herstellung leicht trüb, wohingegen bei den Wirkstoffkonzentraten der Vergleichsbeispiele V2 und V3 eine deutliche Auftrennung in 2 oder mehr Phasen beobachtet wurde. Nach 10 Tagen bei 20°C waren die Wirkstoffkonzentrate der Beispiele 1 und 4 leicht trüb und die Wirkstoffkonzentrate der Beispiele 2 und 3 klar. Die Wirkstoffkonzentrate der Vergleichsbeispiele V2 und V3 waren nach Schütteln wolkig trüb und zeigten im Falle des Vergleichbeispiels V3 deutlich 2 Phasen.

Zur Bestimmung der Temperaturstabilität wurden Proben der Wirkstoffkonzentrate der Beispiele 1 bis 4 und des Vergleichsbeispiels V3 in Küvetten jeweils eine Stunde bei 25, 30, 40, 45, 50 und 54°C gelagert und anschließend wurde das optische Erscheinungsbild visuell beurteilt. Die Ergebnisse sind in Tabelle 2 zusammengefasst:

**Tabelle 2**

| Lagertemperatur [°C] | 1 | 2 | 3 | 4 | V3 |
|---|---|---|---|---|---|
| 54 | trüb | trüb | trüb | klar | Phasentrennung |
| 50 | trüb | trüb | trüb | klar | Phasentrennung |
| 45 | trüb | trüb | klar | klar | Phasentrennung |
| 40 | trüb | trüb | klar | klar | Phasentrennung |
| 30 | trüb | klar | klar | klar | Phasentrennung |
| 25 | klar | klar | klar | klar | Phasentrennung |

Zur Bestimmung der Verdünnungsstabilität wurden die Wirkstoffkonzentrate mit Cl-PAC-A Wasser bzw. CIPAC-D Wasser jeweils auf Konzentrationen von 4,5 % v/v sowie auf 0,33 % v/v verdünnt. Mit Ausnahme von Vergleichsbeispiel V2 erhielt man in allen Fällen spontan Emulsionen. Jeweils 100 ml der erhaltenen Emulsionen wurden 2 h bei 30°C in Messzylinder gelagert und anschließend wurde die Bildung von Öl bzw. Rahm bestimmt. Die Ergebnisse sind in der folgenden Tabelle 3 zusammengestellt:

**Tabelle 3:**

| | 1 | 2 | 3 | 4 | V2 |
|---|---|---|---|---|---|
| | Verdünnung mit CIPAC-A Wasser auf 4,5 % v/v | | | | |
| Öl [ml] | 0 | 0 | 0 | 0 | 2 |
| Rahm [ml] | 0 | 0 | 0 | 0 | |

| | Verdünnung mit CIPAC-D Wasser auf 4,5 % v/v | | | | |
|---|---|---|---|---|---|
| Öl [ml] | 0 | 0 | 0 | 0 | 2 |
| Rahm [ml] | 0 | 0 | 0 | 0 | |

| | Verdünnung mit CIPAC-A Wasser auf 0,33 % v/v | | | | |
|---|---|---|---|---|---|
| Öl [ml] | 0 | 0 | 0 | 0 | 0 |
| Rahm [ml] | 0 | 0 | 0 | 0 | 0,5 |

| | Verdünnung mit CIPAC-D Wasser auf 0,33 % v/v | | | | |
|---|---|---|---|---|---|
| Öl [ml] | 0 | 0 | 0 | 0 | 0 |
| Rahm [ml] | 0 | 0 | 0 | 0 | 0,5 |

### Beispiele 5 bis 9, Vergleichsbeispiel V4:

Zur Bestimmung der Temperaturstabilität wurden Proben der Wirkstoffkonzentrate der Beispiele 5 bis 9 und des Vergleichsbeispiels V4 in Küvetten jeweils eine Stunde bei -5, 0, 54, 60, 65, 70, 75 und 80°C sowie bei -10 bis +10°C (Temperaturzyklus, jeweils 12h oszillierend, 5 Zyklen) gelagert und anschließend wurde das optische Erscheinungsbild visuell beurteilt. Die Ergebnisse sind in Tabelle 4 zusammengefasst:

**Tabelle 4**

| Lagertemperatur [°C] | 5 | 6 | 7 | 8 | 9 | V4 |
|---|---|---|---|---|---|---|
| 80 | ++ | ++ | ++ | - | - | - |
| 75 | ++ | ++ | ++ | ++ | - | - |
| 70 | ++ | ++ | ++ | ++ | - | - |
| 65 | ++ | ++ | ++ | ++ | ο | - |
| 60 | ++ | ++ | ++ | ++ | + | - |
| 54 | ++ | ++ | ++ | ++ | ++ | - |
| 0 | ++ | ++ | ++ | + | + | - |
| -5 | ++ | ++ | ++ | + | + | - |
| -10/+10 | ++ | ++ | ++ | + | + | - |

| | | | | | | |
|---|---|---|---|---|---|---|
| "++" = klar, "+" = leicht trüb, "o" = trüb, "-" Phasentrennung | | | | | | |

### Beispiele 10 bis 14:

Zur Bestimmung der Temperaturstabilität wurden Proben der Wirkstoffkonzentrate der Beispiele 10 bis 14 in Küvetten jeweils 8 Wochen bei -10, -5, 0, 10, 23, 30, 40 und 50°C sowie bei -10 bis +10°C (Temperaturzyklus, jeweils 12h oszillierend, 5 Zyklen) gelagert und anschließend wurde das optische Erscheinungsbild visuell beurteilt. Die Ergebnisse sind in Tabelle 5 zusammengefasst:

**Tabelle 5**

| Lagertemperatur [°C] | 10 | 11 | 12 | 13 | 14 |
|---|---|---|---|---|---|
| 50 | + | + | + | + | + |
| 40 | + | + | + | + | + |
| 30 | + | + | + | + | + |
| 23 | + | + | + | + | + |
| 10 | + | + | + | + | + |
| 0 | ο | - | + | + | + |
| -5 | + | - | + | + | + |
| -10 | - | - | + | + | + |
| -10/+10 | ++ | ++ | + | + | + |

| | | | | | |
|---|---|---|---|---|---|
| "++" = klar, "+" = leicht trüb, "o" = trüb, "-" Phasentrennung | | | | | |

Zur Bestimmung der Verdünnungsstabilität wurde das Wirkstoffkonzentrat aus Beispiel 13 mit CIPAC-A Wasser bzw. CIPAC-D Wasser unmittelbar nach seiner Herstellung sowie nach Lagerung für 2 Wochen auf 54°C jeweils auf Konzentrationen von 4,5 % v/v sowie auf 0,5 % v/v verdünnt. Die Emulsionsbildung fand in allen Fällen problemlos statt. Die erhaltenen Emulsionen wurden jeweils 30 min, 2 h und 24 h nach Verdünnen und lagern der Emulsion bei 30°C bezüglich der Bildung von Öl bzw. Rahm beurteilt. Mit Ausnahme der auf 4,5 % v/v verdünnten Wirkstoffkonzentrate wurde in den erhaltenen Emulsionen zu keinem Zeitpunkt die Bildung von Öl, Rahm oder Sediment beobachtet. Die Emulsionen, welche durch Verdünnen des frisch hergestellten Wirkstoffkonzentrats mit CIPAC-A bzw. mit CIPAC-D Wasser auf 4,5 % v/v hergestellt worden waren, zeigten bei 30 min. und 2 h keine Bildung von Öl, Rahm oder Sediment. Nach 24 h wurden Spuren von Sediment beobachtet, die sich durch Schütteln der Emulsion problemlos reemulgieren ließen. Die Emulsionen, welche durch Verdünnen des 2 Wochen bei 54°C gelagerten Wirkstoffkonzentrats mit CIPAC-A bzw. mit CIPAC-D Wasser auf 4,5 % v/v hergestellt worden waren, zeigten bei 30 min. und 2 h keine Bildung von Öl, Rahm oder Sediment. Nach 24 h wurden Spuren von Sediment beobachtet, die sich durch Schütteln der Emulsion problemlos reemulgieren ließen.

## Patentansprüche

1. Flüssiges, in Wasser emulgierbares Wirkstoffkonzentrat, enthaltend die folgenden Bestandteile:
a) 100 bis 400 g/l wenigstens eines herbiziden Dinitroanilins;
b) 5 bis 100 g/l wenigstens eines Imidazolinonherbizides in Form seines Ammoniumsalzes oder substituierten Ammoniumsalzes;
c) 20 bis 100 g/l Wasser;
d) 15 bis 150 g/l wenigstens einer anionischen oberflächenaktiven Substanz, die wenigstens eine Sulfonsäuregruppe aufweist, in Form ihres Natrium-, Kalium-, Ammonium- oder substituierten Ammoniumsalzes;
e) 5 bis 100 g/l wenigstens einer polymeren, nichtionischen oberflächenaktiven Substanz, die wenigstens eine Polyethylenoxid-Gruppe und wenigstens einen unter Poly-C₃-C₄-alkylenoxidgruppen ausgewählten Rest aufweist;
f) 50 bis 250 g/l wenigstens einer nichtionischen oberflächenaktiven Substanz, ausgewählt unter ethoxilierten Fettsäureestern von Polyhydroxylverbindungen, Alkylpolyglucosiden, ethoxilierten C₄-C₁₆-Alkylphenolen und ethoxilierten C₈-C₂₂-Alkanolen; und
g) wenigstens eines Kohlenwasserstofflösungsmittels ad 1 l;
wobei die Mengenangaben der Komponenten a) bis f) in g/l auf das Gesamtvolumen des Wirkstoffkonzentrats bezogen sind.

2. Wirkstoffkonzentrat nach Anspruch 1, wobei das herbizide Dinitroanilin Pendimethalin ist.

3. Wirkstoffkonzentrat nach einem der vorhergehenden Ansprüche, wobei das herbizide Imidazolinonherbizid Imazamox ist.

4. Wirkstoffkonzentrat nach einem der vorhergehenden Ansprüche, wobei das Gewichtsverhältnis von Bestandteil a) zu Bestandteil b) im Bereich von 2:1 bis 50:1 liegt.

5. Wirkstoffkonzentrat nach einem der vorhergehenden Ansprüche, wobei die Komponente d) ausgewählt ist unter den Natrium- und Ammoniumsalzen von C₄-C₂₀-Alkylbenzolsulfonsäuren, von C₈-C₂₂-Alkylschwefelsäurehalbestern und von Mono- und Di-C₄-C₁₈-alkylestern der Sulfobernsteinsäure und deren Gemischen.

6. Wirkstoffkonzentrat nach Anspruch 5, wobei die Komponente d) ausgewählt ist unter den Ammoniumsalzen von C₄-C₂₀-Alkylbenzolsulfonsäuren.

7. Wirkstoffkonzentrat nach einem der vorhergehenden Ansprüche, wobei der Bestandteil e) ausgewählt ist unter Ethylenoxid-co-Propylenoxid-Blockcopolymeren.

8. Wirkstoffkonzentrat nach einem der vorhergehenden Ansprüche, wobei der Bestandteil e) ein zahlenmittleres Molekulargewicht im Bereich von 1500 bis 100000 Dalton aufweist.

9. Wirkstoffkonzentrat nach einem der vorhergehenden Ansprüche, wobei das Gewichtsverhältnis von Bestandteil d) zu Bestandteil e) im Bereich von 20:1 bis 1:5 liegt.

10. Wirkstoffkonzentrat nach einem der vorhergehenden Ansprüche, worin der Bestandteil f) ausgewählt ist unter ethoxilierten Sorbitan-Fettsäureestern.

11. Wirkstoffkonzentrat nach einem der vorhergehenden Ansprüche, wobei der Bestandteil g) unter Alkylaromaten ausgewählt ist.

12. Wirkstoffkonzentrat nach einem der vorhergehenden Ansprüche, enthaltend weniger als 200 ppm mehrwertige Metallkationen.

13. Wirkstoffkonzentrat nach einem der vorhergehenden Ansprüche, enthaltend zusätzlich wenigstens einen anorganischen Puffer.

14. Wirkstoffkonzentrat nach einem der vorhergehenden Ansprüche, wobei die Bestandteile a) bis g) wenigstens 99 Gew.-% des Wirkstoffkonzentrats ausmachen.

15. Verwendung eines Wirkstoffkonzentrats nach einem der vorhergehenden Ansprüche zur Bekämpfung von unerwünschtem Pflanzenwuchs.

## Claims

1. A liquid, water-emulsifiable active ingredient concentrate comprising the following constituents:
a) 100 to 400 g/l of at least one herbicidal dinitroaniline ;
b) 5 to 100 g/l of at least one imidazolinone herbicide in the form of its ammonium salt or substituted ammonium salt;
c) 20 to 100 g/l of water;
d) 15 to 150 g/l of at least one anionic surface-active substance which has at least one sulfonic acid group, in the form of its sodium, potassium, ammonium or substituted ammonium salt;
e) 5 to 100 g/l of at least one polymeric, nonionic surface-active substance which has at least one polyethylene oxide group and at least one radical selected from poly-C₃-C₄-alkylene oxide groups;
f) 50 to 250 g/l of at least one nonionic surface-active substance selected from ethoxylated fatty acid esters of polyhydroxyl compounds, alkyl polyglucosides, ethoxylated C₄-C₁₆-alkylphenols and ethoxylated C₈-C₂₂-alkanols; and
g) at least one hydrocarbon solvent ad 1 I;
where the quantitative data of components a) to f) in g/l are based on the total volume of the active ingredient concentrate.

2. The active ingredient concentrate according to claim 1, where the herbicidal dinitroaniline is pendimethalin.

3. The active ingredient concentrate according to any one of the preceding claims, where the herbicidal imidazolinone herbicide is imazamox.

4. The active ingredient concentrate according to any one of the preceding claims, where the weight ratio of constituent a) to constituent b) is in the range from 2:1 to 50:1.

5. The active ingredient concentrate according to any one of the preceding claims, where component d) is selected from sodium and ammonium salts of C₄-C₂₀-alkylbenzenesulfonic acids, of C₈-C₂₂-alkylsulfuric acid half-esters and of mono- and di-C₄-C₁₈-alkyl esters of sulfosuccinic acid and mixtures thereof.

6. The active ingredient concentrate according to claim 5, where component d) is selected from the ammonium salts of C₄-C₂₀-alkylbenzenesulfonic acids.

7. The active ingredient concentrate according to any one of the preceding claims, where constituent e) is selected from ethylene oxide-co-propylene oxide block copolymers.

8. The active ingredient concentrate according to any one of the preceding claims, where constituent e) has a number-average molecular weight in the range from 1500 to 100000 Daltons.

9. The active ingredient concentrate according to any one of the preceding claims, where the weight ratio of constituent d) to constituent e) is in the range from 20:1 to 1:5.

10. The active ingredient concentrate according to any one of the preceding claims, in which constituent f) is selected from ethoxylated sorbitan fatty acid esters.

11. The active ingredient concentrate according to any one of the preceding claims, where constituent g) is selected from alkylaromatics.

12. The active ingredient concentrate according to any one of the preceding claims, comprising less than 200 ppm of polyvalent metal cations.

13. The active ingredient concentrate according to any one of the preceding claims, additionally comprising at least one inorganic buffer.

14. The active ingredient concentrate according to any one of the preceding claims, where constituents a) to g) constitute at least 99% by weight of the active ingredient concentrate.

15. The use of an active ingredient concentrate according to any one of the preceding claims for controlling undesired plant growth.

## Revendications

1. Concentré liquide de substances actives, émulsifiable dans l'eau, contenant les composants suivants :
a) 100 à 400 g/l d'au moins une dinitroaniline herbicide ;
b) 5 à 100 g/l d'au moins un herbicide imidazolinone sous forme de son sel d'ammonium ou sel d'ammonium substitué ;
c) 20 à 100 g/l d'eau ;
d) 15 à 150 g/l d'au moins une substance tensioactive anionique qui comporte au moins un groupe sulfo, sous forme de son sel de sodium, de potassium, d'ammonium ou ammonium substitué ;
e) 5 à 100 g/l d'au moins une substance tensioactive non ionique polymère, qui comporte au moins un groupe polyoxyéthylène et au moins un radical choisi parmi des groupes poly(oxyalkylène en C₃-C₄) %
f) 50 à 250 g/l d'au moins une substance tensioactive non ionique, choisie parmi des esters d'acides gras éthoxylés de composés polyhydroxylés, des alkylpolyglucosides, des alkyl(C₄-C₁₆)phénols éthoxylés et des alcanols en C₈-C₂₂ éthoxylés ; et
g) au moins un solvant de type hydrocarbure jusqu'à 1 1 ;
les données quantitatives des composants a) à f) en g/l se rapportant au volume total du concentré de substances actives.

2. Concentré de substances actives selon la revendication 1, dans lequel la dinitroaniline herbicide est la pendiméthaline.

3. Concentré de substances actives selon l'une quelconque des revendications précédentes, dans lequel l'herbicide imidazolinone est l'imazamox.

4. Concentré de substances actives selon l'une quelconque des revendications précédentes, dans lequel le rapport pondéral du composant a) au composant b) se situe dans la plage allant de 2:1 à 50:1.

5. Concentré de substances actives selon l'une quelconque des revendications précédentes, dans lequel le composant d) est choisi parmi les sels de sodium et d'ammonium d'acides alkyl(C₄-C₂₀)benzènesulfoniques, d'hémiesters d'acides alkyl(C₈-C₂₂)sulfuriques et de monoesters et diesters alkyliques en C₄-C₁₈ de l'acide sulfosuccinique et des mélanges de ceux-ci.

6. Concentré de substances actives selon la revendication 5, dans lequel le composant d) est choisi parmi les sels d'ammonium d'acides alkyl(C₄-C₂₀)benzène-sulfoniques.

7. Concentré de substances actives selon l'une quelconque des revendications précédentes, dans lequel le composant e) est choisi parmi des copolymères séquencés oxyde d'éthylène/oxyde de propylène.

8. Concentré de substances actives selon l'une quelconque des revendications précédentes, dans lequel le composé e) présente une masse moléculaire moyenne en nombre dans la plage de 1 500 à 100 000 daltons.

9. Concentré de substances actives selon l'une quelconque des revendications précédentes, dans lequel le rapport pondéral du composant d) au composant e) se situe dans la plage allant de 20:1 à 1:5.

10. Concentré de substances actives selon l'une quelconque des revendications précédentes, dans lequel le composant f) est choisi parmi des esters d'acides gras et de sorbitanne éthoxylés.

11. Concentré de substances actives selon l'une quelconque des revendications précédentes, dans lequel le composant g) est choisi parmi des composés alkyl-aromatiques.

12. Concentré de substances actives selon l'une quelconque des revendications précédentes, contenant moins de 200 ppm de cations métalliques plurivalents.

13. Concentré de substances actives selon l'une quelconque des revendications précédentes, contenant en outre au moins un tampon inorganique.

14. Concentré de substances actives selon l'une quelconque des revendications précédentes, dans lequel les composants a) à g) représentent au moins 99 % en poids du concentré de substances actives.

15. Utilisation d'un concentré de substances actives selon l'une quelconque des revendications précédentes, pour la lutte contre la croissance de plantes indésirables.
